# EUROPEAN PATENT SPECIFICATION

(11) **EP 3 118 472 B1**
(45) Date of publication and mention of the grant of the patent: **20.06.2018**
(21) Application number: 16178523.3
(22) Date of filing: 08.07.2016
(51) Int. Cl.: F16C 3/02, B65H 75/24

(54) **A ROTATING SHAFT BEING COMPOSED OF A PLURALITY OF LONGITUDINAL SECTORS**
DREHBARE WELLE, AUFGEBAUT AUS EINER MEHRZAHL LÄNGLICHER SEKTOREN
ARBRE ROTATIF ASSEMBLÉS DE SEGMENTS LONGITUDINAUX

(30) Priority: 14.07.2015 IT UB20152144
(43) Date of publication of application: 18.01.2017
(73) Proprietor: SVECOM - P.E. S.R.L., 36075 Montecchio Maggiore VI (IT)
(72) Inventor: MARIN, Giancarlo, 36075 Montecchio Maggiore (VI) (IT); MARIN, Ivo, 36040 Brendona (VI) (IT)
(74) Representative: Trentin, Michele

(56) References cited:
- EP-A1- 0 358 836
- EP-A1- 0 736 476
- DE-C- 681 109
- FR-A- 599 582

## Description

### Field of the invention

The present invention is generally applicable to the field of mechanical handling and, in particular, it relates to rotating shafts for the transmission of rotary motion from a motor.

More in detail, the present invention relates to a rotating shaft for a plurality of application, but particularly suitable to produce an expanding shaft.

### Background of the invention

In the field of mechanical handling, the rotating shafts for the transmission of the rotary motion generated by a motor are a critical element. The applications wherein such shafts are used are particularly numerous. Some known examples are the motor shaft in a vehicle or the axle shafts of a vehicle, but other examples may be the shafts that move the propellers of a ship or of a wind generator.

Expanding shafts used in papermaking and paper and carboard industries, in wrapping, printing and packaging fields are further examples whereto the present invention is particularly applicable.

In all such applications the shaft is rotated by a motor and it transmits such rotary motion to an element of the mechanical transmission to which it is connected. In the above mentioned example regarding the expanding shafts for the papermaking industry, it puts in rotation a reel for the winding or unwinding of paper.

The size of such shafts depends on the application and, therefore, it is evident that it is often particularly relevant and the use thereof leads them to move elements whose weight may be of quintals or of tons or even more.

It is evident that under such conditions the stresses whereto they are subjected are such as to force those who produce them to give special solidity to the shaft. Since the shafts typically have (especially those of large cross-section) a substantially tubular body generally, but not necessarily, cylindrical, what has just been mentioned results in a considerable increase of the thickness of such a tubular body.

On the other hand, however, the producer should not exaggerate in this sense since this would lead to an excessive increase of the weight of the shaft thus subjecting the motor to further stress. Consequently, there would be the need to overestimate the motor with a considerable increase of the production costs of the machine. Moreover, obviously, also the rotation speed would be affected being necessarily lower than the one that may be obtained with lighter shafts. This latter aspect is nearly always relevant since it results in a lower speed of locomotion or in higher energy consumption in the case of vehicles. In the case of production lines, it results in higher production times.

Remaining in the field of the expanding shafts, such a detail may result in a slowdown of the processing, for example in production lines of a papermaking industry.

Therefore, in the prior art, attempts were made to produce transmission shafts with materials resistant to the stresses to which they are subjected, but light, such as aluminum. Moreover, in this case, the production costs greatly decrease since such shafts are obtained by direct extrusion thereof.

However, with such a method of production it is possible to produce shafts with limited cross-section. Typically, in fact, with the extrusion cylindrical shafts may be obtained up to a maximum of 20 mm of diameter.

When shafts with larger cross-section are needed, producers are forced to start from a full metal bar and "dig" it, that is to drill it longitudinally to obtain the desired tubular body.

Clearly, in such cases, the production costs are high not only for the difficulty of execution of the hole, but also for the enormous amount of waste material. Moreover, it is difficult to obtain tubular bodies with limited thicknesses.

In the example of the expanding shafts, on the outer surface they have longitudinal grooves that house the expanding elements. Between one groove and the next one there is a kerb that, in the case of extruded shafts, is empty in order not to unnecessarily make the shaft heavier.

In the case of shafts with large cross-section obtained starting from a full metal bar, it would be excessively expensive to make empty those backbones, therefore they remain full. Evidently, this undesirably increases the weight of the shaft thus forcing to oversize the motor that moves it and to decrease the maximum rotational speed thereof.

Document DE 681 109C describes a rotating shaft with the features of the preamble of claim 1.

### Summary of the invention

Object of the present invention is to at least partially overcome the above mentioned drawbacks, by providing a rotating shaft for the transmission of rotary motion from a motor that is easy to perform whatever the size of the cross-section thereof is.

Another object of the present invention is to provide a rotating shaft having optimized thicknesses in cross-section so as to minimize the production costs.

A further object of the invention is that the rotating shaft allows to minimize the processing waste material.

Another object is to provide a rotating shaft that is usable as expanding shaft and that, the features of use being equal, has production costs lower than the equivalent known shafts.

Such objects, and others that will appear more clearly hereinafter, are fulfilled by a rotating shaft for the transmission of the rotary motion generated by a motor in accordance with the following claims that are an integral part of this patent.

In particular, the shaft of the invention, as defined in claim 1, comprises a substantially tubular body.

According to the invention, it consists of a plurality of longitudinal sectors that develop throughout the entire length of the tubular body. Moreover, there are coupling means on each side edge of a respective one of the longitudinal sectors with the corresponding side edge of the adjacent longitudinal sector.

Therefore, in other words, the tubular body, that consists in a rotating shaft, is modular, being composed by a plurality of longitudinal sectors arranged side by side and stably joined.

Advantageously, therefore, the production of the tubular body is divided in the production of smaller longitudinal sectors, thus facilitating it and decreasing the costs.

Also the measures of the thicknesses of the tubular body are more accurate since they are achievable without having to "dig" a full bar. Furthermore, the number of longitudinal sectors may be any, thus reducing the size of the single sectors and, as a result, facilitating the production thereof.

Moreover, the latter detail allows to produce the single longitudinal sector in aluminum and by extrusion, further minimizing the production costs and the waste material.

It is evident that such a shaft is well suited to be used as expanding shaft being, not only the longitudinal grooves, but also, in the case of extrusion in aluminum, the slots in the side kerbs, particularly easy to produce.

To the aforementioned, it is evident that the above mentioned objects are also fulfilled by a method of producing a rotating shaft for the transmission of rotary motion from a motor. Such a method is characterized in that it comprises the following steps:
- making, by extrusion, a plurality of longitudinal sectors of said shaft by shaping a first side edge of each of said longitudinal sectors and by counter-shaping the second side edge of each of said longitudinal sectors, said shaped portion and said counter-shaped portion being shaped to reciprocally couple;
- coupling said longitudinal sectors therebetween to compose a substantially tubular body;
- stabilizing said couplings by inserting at least one pin in the junction between each pair of said adjacent longitudinal sectors.

### Brief description of the drawings

Further features and advantages of the invention will become more evident by reading the detailed description of some preferred, but not exclusive, embodiments of a rotating shaft for the transmission of the rotary motion of a motor according to the invention, shown as not limitative example with the help of the annexed figures, wherein:
FIG. 1 shows a rotating shaft according to the invention in a front view;
FIG. 2 shows the shaft of FIG. 1 in an axonometric view;
FIG. 3 shows the shaft of FIG. 1 in an exploded front view;
FIGs. 4 and 5 show details of the rotating shaft of Fig. 1.

### Detailed description of some preferred embodiments

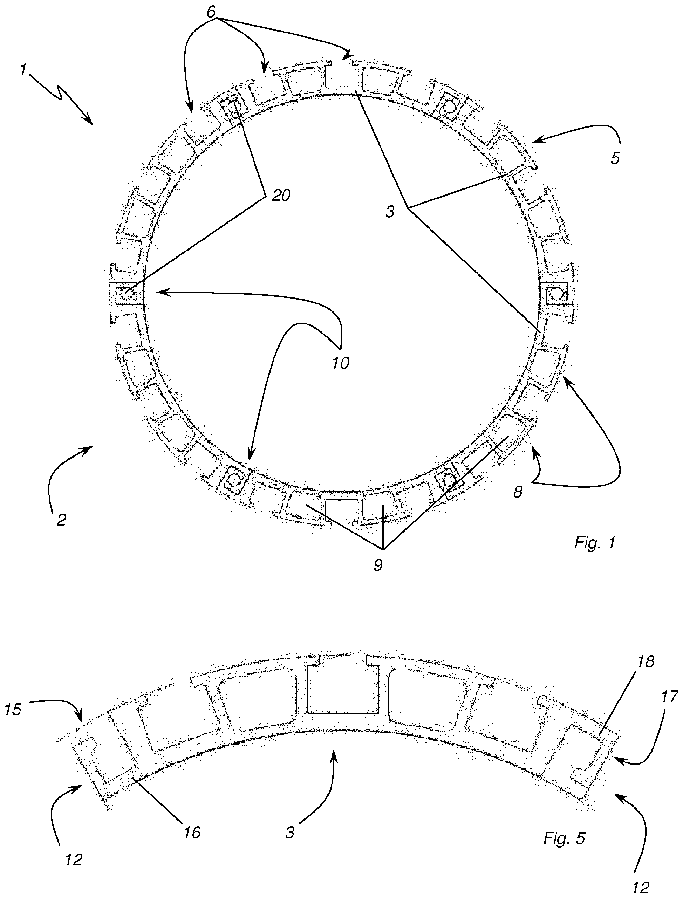

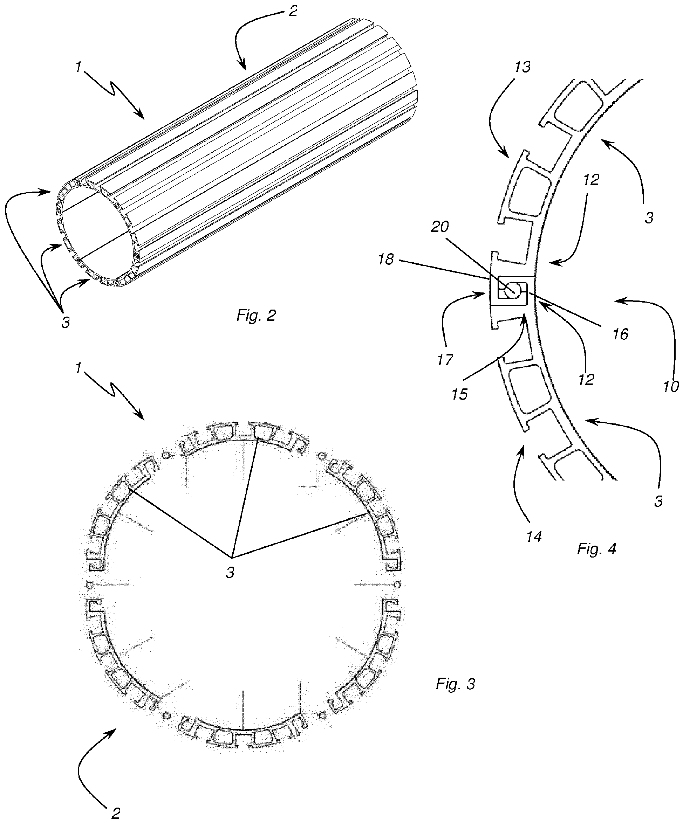

With reference to the above mentioned figures, and particularly to FIGs. 1 and 2, it is described a rotating shaft 1 for the transmission of the rotary motion generated by a motor.

As aforementioned, the applications of a rotating shaft may be the most varied. In the figures, it is shown an expanding shaft, but this should not be considered as limitative for the invention.

First of all, it is observed that, as generally occurs for the known shafts, the shaft 1 of the invention comprises a substantially tubular body 2. In the figures it is cylindrical, but this should not be considered as limitative for different embodiments wherein the tubular body has different shaped cross-section, such as quadrilateral or mixtilinear.

According to an aspect of the invention, the tubular body 2 comprises a plurality of longitudinal sectors 3 that develop throughout the entire length of the tubular body 2. In other words, as it is also shown in the exploded view of Fig. 3, the tubular body 2 is modular, being composed by a plurality of longitudinal sectors 3 arranged side by side and joined.

Advantageously, in this way, the production of the shaft **1** of the invention is simplified since it is obtained by producing elements of smaller size and, therefore, of easier processing.

In particular, according to another aspect of the invention, each longitudinal sector **3** is made by extrusion thereof in aluminum. This allows to easily and cheaply shape each longitudinal sector **3** and, thanks to the use of aluminum, it allows to produce a shaft **1** resistant to stresses to which it is subjected while keeping it light. Consequently, the motor may be chosen with a power lower than what happens in the prior art thus optimizing costs as well as power consumption. Even the obtainable rotation speed, being the motor equal, is higher thus allowing earnings also during the operational phase. In the case of shafts **1** used in the production lines, for example, the processing speed is increased thus increasing the productivity of the line and decreasing, consequently, the cost per piece of the obtained product.

Even the thicknesses may be optimized with ease and accuracy, thus reducing even more the weight of the shaft **1,** the waste material and the production costs.

In the case of expanding shafts **1** shown in the figures, each of the longitudinal sectors **3** has, on the outer surface **5,** one or more longitudinal grooves **6.** Such grooves **6** are needed to subsequently house the expanding elements operable on command.

Moreover, it is observed that such grooves laterally form longitudinal kerbs **8.** The latter are empty to reduce the weight of the shaft **1.**

It is evident that the production of the longitudinal sectors **3** by extrusion allows not only to easily realize the longitudinal grooves **6,** but also the slots **9** of the kerbs **8** thus minimizing, if not eliminating, the waste material and minimizing the overall weight of the shaft **1.** The production costs are thus minimized both for the substantial absence of such waste material, and for the fact that the grooves **6** and the slots **9** of the kerbs **8** are immediately obtained by extrusion.

It is evident that also such details should not be considered as limitative for the invention. In particular, one or more longitudinal sectors, almost all, may be made with other methods, such as by turning of metal bars. In any case, the production is simple and the waste material is minimized. Even the control of the thicknesses may be more accurate still reducing the weight of the rotating shafts with respect to the known equivalent shafts.

According to another aspect of the invention, the rotating shaft **1** further comprises coupling means **10** of the longitudinal sectors **3** therebetween.

In particular, as it may be observed in the details of FIGs. 4 and 5, such coupling means **10** allow to join each side edge **12** of a respective one **13** of the longitudinal sectors **3** with the corresponding side edge **12** of the adjacent longitudinal sector **14.**

In particular, the coupling means **10** comprise a shaped portion **15** made on a first side edge **16** of each of the longitudinal sectors **3,** and a counter-shaped portion **17** made on the second side edge **18** of each of the longitudinal sectors **3.** Such shaped portions **15** and counter-shaped portions **17** are shaped to reciprocally couple.

However, since the rotating shafts **1** typically have considerable dimensions both in cross-section and in length, an accurate coupling, especially if in aluminum, may make the assembly of the shaft **1** thereof complicated if not impossible.

For this reason, the shaped portions **15** and the counter-shaped portions **17** are such as to facilitate the assembly, but they do not allow to make the coupling perfectly stable. Advantageously, therefore, the coupling means **10** further comprise a pin **20** shaped to be placed in the junction between the shaped portion **15** of the first side edge **16** of one of the longitudinal sectors **13** and the counter-shaped portion **17** of the second side edge **18** of the adjacent longitudinal sector **14.** Such a pin **20,** as may be easily understood from the figures, allows to prevent reciprocal movements of the joined longitudinal sectors **3** by easily stabilizing such a junction.

According to another aspect of the invention, the pin **20** is chromed to facilitate the insertion thereof in the junction between the two adjacent longitudinal sectors **3.**

However, even such operative details are to be considered as not limitative for the invention, the junction between adjacent longitudinal sectors being further obtainable with alternative methods without, however, departing from the scope of protection of this patent.

According to another aspect of the invention, the shafts **1,** as known, have to ensure a minimum payload depending on the type of use. In this sense, the unwanted increase of the thicknesses of the shaft **1** thereof may be necessary.

To solve such a need, according to another aspect of the invention, the shaft **1** comprises a shim, not shown in the figures, of reinforcing composite material placed inside and concentric to the tubular body 2. Such a composite material typically comprises a first matrix material and a reinforcing fiber element. In this way, it advantageously increases the payload of the shaft **1** with materials that are low-cost and that weigh less than the materials with which the longitudinal sectors **3** are made. Furthermore, the arrangement inside the tubular body **2** of such a shim of composite material is simplified by the modularity of the tubular body **2,** being the arrangement of such shim allowed before the assembly and the stabilization of the tubular body **2.**

Typically, the first material is a resin, while the reinforcing fiber element consists of carbon fiber. However, even such a detail should not be considered as limitative for different embodiments of the invention.

Operatively, the production of a rotating shaft **1** such as the one herein described is performed as follows.

Firstly, the longitudinal sectors **3,** necessary to arrange a shaft **1** of the desired size, are made by extrusion in aluminium. Each of such sectors **3,** thanks to the extrusion, is shaped at will without the need for subsequent turnings. In particular, each longitudinal sector **3** has the correct shaped portion **15** on the first side edge **16** and the correct counter-shaped portion **17** on the second side edge **18.** Such shaped portions **15** and counter-shaped portions **17** are, as mentioned, shaped to allow the coupling between adjacent longitudinal sectors **3.**

Subsequently, then, such a coupling is performed by making the shaped portions **15** and the counter-shaped portion **17** penetrate. The tubular body **2** of the desired size is, therefore, obtained.

Finally, each coupling is stabilized by inserting the pins **20** in the suitable seat.

To obtain shafts **1** of different cross-sections, it is advantageously sufficient to couple a greater number of longitudinal sectors **3.** In the case of the cylindrical tubular body **2** shown in the figures, it is necessary to vary the radius of curvature of each longitudinal sector **3.**

To the aforementioned, it is evident that the rotating shaft of the invention fulfils all the intended objects.

In particular, it is easy to perform whatever the size and the shape of the cross-section thereof are.

The thicknesses are optimized by the stresses to which the shaft is subjected and, therefore, the production costs are minimized. In particular, it is certainly reduced, if not eliminated, the waste material with respect to what occurs in the prior art.

The weight of the shafts thus obtained is even minimized being possible to use also lighter materials such as aluminum. Moreover, in this case, it is possible to proceed by extrusion with all the advantages deriving therefrom.

Therefore, it is evident that such a rotating shaft is well suited to be used as expanding shaft with lower production costs and better mechanical features compared with known equivalent shafts.

The invention is susceptible of numerous modifications and variations, all falling within the appended claims. All the details may be replaced with other technically equivalent elements, and the materials may be different according to requirements, without departing from the scope of protection of the invention defined by the appended claims.

## Claims

1. A rotating shaft for the transmission of rotary motion from a motor, said shaft **(1)** comprising a substantially tubular body **(2),** which consists of a plurality of longitudinal sectors **(3)** that develop throughout the entire length of said tubular body **(1), characterized in that** it comprises coupling means **(10)** of each side edge **(12)** of a respective one **(13)** of said longitudinal sectors **(3)** coupled with the corresponding side edge **(12)** of the adjacent longitudinal sector **(14).**

2. Rotating shaft according to claim 1, **characterized in that** at least one of said longitudinal sectors **(3)** is obtained by extrusion in aluminum.

3. Rotating shaft according to claim 1 or 2, **characterized in that** said coupling means **(10)** comprise a shaped portion **(15)** made on a first side edge **(16)** of each of said longitudinal sectors **(3),** and a counter-shaped portion **(17)** made on the second side edge **(18)** of each of said longitudinal sectors **(3),** said shaped portion **(15)** and said counter-shaped portion **(17)** being shaped to reciprocally couple.

4. Rotating shaft according to claim 3, **characterized in that** said coupling means **(10)** comprise at least one pin **(20)** shaped to be placed in the junction between said shaped portion **(15)** of said first side edge **(16)** of one **(13)** of said longitudinal sectors **(3)** and said counter-shaped portion **(17)** of said second side edge **(18)** of said adjacent longitudinal sector **(14).**

5. Rotating shaft according to claim 4, **characterized in that** said pin **(20)** is chromed.

6. Rotating shaft according to one or more of claims 1 to 5, **characterized in that** the rotating shaft is an expanding shaft and each of said longitudinal sectors **(3)** has, on the outer surface **(5),** one or more longitudinal grooves **(6)** to house expanding elements operable on command.

7. Expanding shaft according to claim 6, **characterized in that** longitudinal kerbs **(8)** are interposed between pairs of said longitudinal grooves **(6),** said kerbs **(8)** being empty.

8. Expanding shaft according to claim 6 or 7, **characterized in** having a shim of composite material comprising a first matrix material and a reinforcing fiber element, said shim being placed inside and concentric to said tubular body **(2)** to increase the payload of said expanding shaft **(1).**

9. Expanding shaft according to claim 8, **characterized in that** said first material is a resin and said reinforcing fiber element is carbon fiber.

10. Method to produce a rotating shaft **(1)** for the transmission of rotary motion from a motor **characterized in** comprising the following steps:
- making, by extrusion, a plurality of longitudinal sectors **(3)** of said shaft **(1)** by shaping a first side edge **(16)** of each of said longitudinal sectors (3) and counter-shaping the second side edge **(18)** of each of said longitudinal sectors **(3),** said shaped portion **(15)** and said counter-shaped portion **(17)** being shaped to reciprocally couple;
- coupling said longitudinal sectors **(3)** therebetween to compose a substantially tubular body **(2);**
- stabilizing said coupling by inserting at least one pin **(20)** in the junction between each pair of said adjacent longitudinal sectors **(3).**

## Patentansprüche

1. Rotierende Welle für die Übertragung von Drehbewegung von einem Motor, wobei die Welle (1) einen im Wesentlichen rohrförmigen Körper (2) umfasst, der aus mehreren längsverlaufenden Sektoren (3) besteht, die sich über die gesamte Länge des rohrförmigen Körpers (1) entwickeln, **dadurch gekennzeichnet, dass** sie umfasst
Kopplungsmittel (10) jeder Seitenkante (12) eines entsprechenden Elementes (13) der längsverlaufenden Sektoren (3), das mit der entsprechenden Seitenkante (12) des benachbarten längsverlaufenden Sektors (14) verbunden ist.

2. Rotierende Welle nach Anspruch 1, **dadurch gekennzeichnet, dass** mindestens einer der längsverlaufenden Sektoren (3) durch Extrusion in Aluminium erhalten wird.

3. Rotierende Welle nach Anspruch 1 oder 2, **dadurch gekennzeichnet, dass** die Kopplungsmittel (10) einen geformten Teil (15) umfassen, der auf einer ersten Seitenkante (16) jedes der längsverlaufenden Sektoren (3) hergestellt ist, und ein gegengeformtes Teil (17), das auf der zweiten Seitenkante (18) jedes der längsverlaufenden Sektoren (3) hergestellt ist, wobei der geformte Teil (15) und der gegengeformte Teil (17) so geformt sind, dass sie sich wechselseitig verbinden.

4. Rotierende Welle nach Anspruch 3, **dadurch gekennzeichnet, dass** die Kopplungsmittel (10) mindestens einen Stift (20) umfassen, der so geformt ist, dass er in die Verbindung zwischen dem geformten Teil (15) der ersten Seitenkante (16) von einem (13) der längsverlaufenden Sektoren (3) und dem gegengeformten Teil (17) der zweiten Seitenkante (18) des angrenzenden längsverlaufenden Sektors (14) gebracht wird.

5. Rotierende Welle nach Anspruch 4, **dadurch gekennzeichnet, dass** der Stift (20) verchromt ist.

6. Rotierende Welle nach einem der Ansprüche 1 bis 5, **dadurch gekennzeichnet, dass** die rotierende Welle eine sich ausdehnende Welle ist, und jeder der längsverlaufenden Sektoren (3) hat auf seiner Außenfläche (5) eine oder mehrere längsverlaufende Nuten (6) zum Aufnehmen von expandierenden Elementen, die auf Befehl einsatzbereit sind.

7. Expandierende Welle nach Anspruch 6, **dadurch gekennzeichnet, dass** längsverlaufende Kerben (8) zwischen Paaren von längsverlaufenden Nuten (6) eingefügt sind, wobei die Kerben (8) leer sind.

8. Expandierende Welle nach Anspruch 6 oder 7, **dadurch gekennzeichnet, dass** sie eine Abstandsscheibe von Verbundmaterial hat, das ein erstes Matrixmaterial und ein verstärkendes Faserelement umfasst, wobei die Abstandsscheibe im Innern und konzentrisch zum rohrförmigen Körper (2) angeordnet ist, um die Nutzlast der expandierenden Welle (1) zu erhöhen.

9. Expandierende Welle nach Anspruch 8, **dadurch gekennzeichnet, dass** das erste Material ein Harz ist; und das verstärkende Faserelement ist Kohlenstofffaser.

10. Verfahren zum Herstellen einer rotierenden Welle (1) für die Übertragung von Drehbewegung von einem Motor, **dadurch gekennzeichnet, dass** es die folgenden Schritte umfasst:
- durch Extrusion Herstellen mehrerer längsverlaufender Sektoren (3) der Welle (1) durch Formen einer ersten Seitenkante (16) von jedem der längsverlaufenden Sektoren (3) und Gegenformung der zweiten Seitenkante (18) von jedem der längsverlaufenden Sektoren (3), wobei der geformte Teil (15) und der gegengeformte Teil (17) so geformt sind, dass sie sich wechselseitig verbinden;
- Verbinden der längsverlaufenden Sektoren (3) dazwischen, um einen im Wesentlichen rohrförmigen Körper (2) zu bilden;
- Stabilisieren der Verbindung durch Einführen eines Stiftes (20) in die Verbindung zwischen jedem Paar von benachbarten längsverlaufenden Sektoren (3).

## Revendications

1. Arbre rotatif pour la transmission de mouvement de rotation à partir d'un moteur, ledit arbre (1) comprenant un corps sensiblement tubulaire (2), qui est constitué d'une pluralité de secteurs longitudinaux (3) qui se développent sur la longueur entière dudit corps tubulaire (1), **caractérisé en ce qu'**il comprend des moyens d'accouplement (10) de chaque bord latéral (12) de l'un respectif (13) desdits secteurs longitudinaux (3) accouplé au bord latéral correspondant (12) du secteur longitudinal adjacent (14).

2. Arbre rotatif selon la revendication 1, **caractérisé en ce qu'**au moins l'un desdits secteurs longitudinaux (3) est obtenu par extrusion en aluminium.

3. Arbre rotatif selon la revendication 1 ou 2, **caractérisé en ce que** lesdits moyens d'accouplement (10) comprennent une portion formée (15) réalisée sur un premier bord latéral (16) de chacun desdits secteurs longitudinaux (3), et une portion contre-formée (17) réalisée sur le second bord latéral (18) de chacun desdits secteurs longitudinaux (3), ladite portion formée (15) et ladite portion contre-formée (17) étant formées pour s'accoupler réciproquement.

4. Arbre rotatif selon la revendication 3, **caractérisé en ce que** lesdits moyens d'accouplement (10) comprennent au moins une goupille (20) formée pour être placée dans la jonction entre ladite portion formée (15) dudit premier bord latéral (16) de l'un (13) desdits secteurs longitudinaux (3) et ladite portion contre-formée (17) dudit second bord latéral (18) dudit secteur longitudinal adjacent (14).

5. Arbre rotatif selon la revendication 4, **caractérisé en ce que** ladite goupille (20) est chromée.

6. Arbre rotatif selon une ou plusieurs des revendications 1 à 5, **caractérisé en ce que** l'arbre rotatif est un arbre extensif et chacun desdits secteurs longitudinaux (3) possède, sur la surface extérieure (5), une ou plusieurs rainures longitudinales (6) pour loger des éléments extensifs actionnables sur commande.

7. Arbre extensif selon la revendication 6, **caractérisé en ce que** des bordures longitudinales (8) sont interposés entre des paires desdites rainures longitudinales (6), lesdites bordures (8) étant vides.

8. Arbre extensif selon la revendication 6 ou 7, **caractérisé en ce qu'**il possède une cale de matériau composite comprenant un premier matériau matriciel et un élément fibre de renforcement, ladite cale étant placée à l'intérieur dudit corps tubulaire (2), et de façon concentrique par rapport à celui-ci, pour augmenter la charge utile dudit arbre extensif (1).

9. Arbre extensif selon la revendication 8, **caractérisé en ce que** ledit premier matériau est une résine et ledit élément fibre de renforcement est de la fibre de carbone.

10. Procédé pour produire un arbre rotatif (1) pour la transmission de mouvement de rotation à partir d'un moteur, **caractérisé en ce qu'**il comprend les étapes suivantes :
- la réalisation, par extrusion, d'une pluralité de secteurs longitudinaux (3) dudit arbre (1) en formant un premier bord latéral (16) de chacun desdits secteurs longitudinaux (3) et en contre-formant le second bord latéral (18) de chacun desdits secteurs longitudinaux (3), ladite portion formée (15) et ladite portion contre-formée (17) étant formées pour s'accoupler réciproquement ;
- l'accouplement desdits secteurs longitudinaux (3) entre ceux-ci pour composer un corps sensiblement tubulaire (2) ;
- la stabilisation dudit accouplement en insérant au moins une goupille (20) dans la jonction entre chaque paire desdits secteurs longitudinaux adjacents (3).
